# EUROPÄISCHE PATENTSCHRIFT

(11) **EP 1 621 850 B1**
(45) Veröffentlichungstag und Bekanntmachung des Hinweises auf die Patenterteilung: **05.12.2007**
(21) Anmeldenummer: 05106860.9
(22) Anmeldetag: 26.07.2005
(51) Int. Cl.: G01C 5/04

(54) **Messsystem zur Erfassung von Niveauunterschieden**
Measuring apparatus for determining level differences
Dispositif de mesure de différences de niveau

(30) Priorität: 26.07.2004 AT 12752004
(43) Veröffentlichungstag der Anmeldung: 01.02.2006
(73) Patentinhaber: Albrecht, Walter, 3283 St. Anton an der Jessnitz (AT)
(72) Erfinder: Albrecht, Walter, 3283 St. Anton an der Jessnitz (AT)
(74) Vertreter: Müllner, Martin

(56) Entgegenhaltungen:
- EP-A- 1 197 730
- PATENT ABSTRACTS OF JAPAN Bd. 007, Nr. 260 (P-237), 18. November 1983 (1983-11-18) -& JP 58 143216 A (MIZU KANRI KOUGAKU KENKYUSHO:KK), 25. August 1983 (1983-08-25)
- DATABASE WPI Section EI, Week 197817 Derwent Publications Ltd., London, GB; Class S02, AN 1978-D3664A XP002350403 -& SU 554 468 A (EREV POLY) 19. Mai 1977 (1977-05-19)

## Beschreibung

### Technisches Gebiet

Die Erfindung bezieht sich auf ein Messsystem zur Erfassung von Niveauunterschieden gemäß dem Oberbegriff des Anspruchs 1.

### Stand der Technik

Ein gattungsbildendes Messsystem ist aus der JP 58-143216 A bekannt. Bei diesem Messsystem wird der Niveauunterschied von fließenden Gewässern bestimmt, indem das Wasser von zwei verschiedenen Stellen angesaugt wird. Da der Unterdruck, der zum Ansaugen verwendet wird, gleich ist, erhält man in zwei Rohren, die sich einige Meter über der Wasseroberfläche befinden können, denselben Niveauunterschied, wie er im zu vermessenden fließenden Gewässer auftritt.

Bei Vortriebseinrichtungen zum Verlegen von Kanalrohren, bei welchen von einer Grube aus bergmännisch ein Stollen bis zu einer weiteren Grube vorgetrieben wird, in den meist gleichzeitig mit dem Vortrieb ein Rohr eingebracht wird, ist es wesentlich, ein bestimmtes Gefälle einzuhalten. Es sind nun eine Reihe von Niveaumesssystemen bekannt, bei denen meist ein Laser auf eine bestimmte, mit der Vortriebseinrichtung verbundene Zielmarke gerichtet ist und aus einer allfälligen Abweichung von einem Sollwert entsprechende Korrekturmaßnahmen getroffen werden.

Bei diesen Messsystemen ist meist ein hoher Aufwand an elektronischen Bauteilen erforderlich. Diese sind beim Einsatz des Messsystems einer sehr hohen Beanspruchung, insbesondere durch Vibrationen und Schläge, aber auch oft relativ hohen Temperaturen ausgesetzt, wodurch es zu häufigen Ausfällen kommt, wenn nicht besonders belastbare und daher teure Bauteile, die einer speziellen Spezifikation entsprechen, verwendet werden.

Weiters sind Niveaumesssysteme auf der Basis von kommunizierenden Gefäßen, wie z.B. Schlauchwaagen, bekannt. Bei diesen ergibt sich bei einem Einsatz bei Vortriebseinrichtungen das Problem, dass eine Ablesung nur in der Grube erfolgen kann. Außerdem muss die Grube, von der aus der Vortrieb gestartet wird, oft tiefer als sonst notwendig ausgeführt werden, um die Schlauchwaage ablesen zu können, weil das Rohr normalerweise ein Gefälle aufweisen soll.

### Offenbarung der Erfindung

### Technische Aufgabe

Ziel der Erfindung ist es, diese Nachteile zu vermeiden und ein Messsystem für Unterlag-Vortriebseinrichtungen vorzuschlagen, das eine einfache Ablesung ermöglicht und sich durch einen robusten Aufbau auszeichnet.

### Technische Lösung

Erfindungsgemäß wird dies bei einem Messsystem der eingangs erwähnten Art durch die kennzeichnenden Merkmale erreicht.

Durch die vorgeschlagenen Maßnahmen ist es auf einfache Weise möglich, die Sichtrohre z.B. über dem Straßenniveau anzuordnen, wodurch diese einfach abgelesen werden können. Möglich wird dies durch das Anlegen eines Unterdrucks im Bereich des gemeinsamen Luftraumes, der die Kopfräume der beiden Sichtrohre verbindet. Dieser Unterdruck stellt auch sicher, dass die Flüssigkeit nicht aus den Schläuchen abläuft.

Zur Messung von Niveauunterschieden wird ein mit einem Sichtrohr verbundener Schlauch mit seinem freien Ende auf einem bekannten Niveau befestigt. Der mit dem zweiten Sichtrohr verbundene Schlauch wird mit seinem freien Ende an der Vortriebseinrichtung befestigt. In Stillstandsphasen der Vortriebseinrichtung kann nach einer entsprechenden Beruhigungsphase der Niveauunterschied durch Vergleich des Flüssigkeitsstandes in den beiden Sichtrohren abgelesen werden. Der genaue Wert des Unterdrucks spielt keine Rolle; ist der Unterdruck etwas größer, werden lediglich beide Flüssigkeitsstände stärker angehoben, der Unterschied - also der Messwert - bleibt aber gleich.

Durch die Merkmale des Anspruchs 2 ergibt sich der Vorteil einer besseren Stabilität des Messsystems. Außerdem kann durch diese Maßnahmen leichter sichergestellt werden, dass die Schläuche nur wenig Flüssigkeit verlieren. Dabei sind die Messpunkte der Endbereiche der Schläuche durch den Übergang zur Aufwölbung gebildet, die sich im Wesentlichen bis zum Ende des jeweiligen Schlauches erstrecken.

Durch die Merkmale des Anspruchs 3 ergibt sich der Vorteil, dass während des Betriebs der Vortriebseinrichtung die Verbindung zwischen dem Sichtrohr und dem entsprechenden Schlauch unterbrochen werden kann. Wird diese Verbindung nach dem Abstellen der Vortriebseinrichtung durch Öffnen des Absperrorgans wieder hergestellt, so treten dabei nur sehr geringe Schwingungen in den Wassersäulen auf, die rasch abklingen. Dadurch kann der Niveauunterschied rasch abgelesen werden.

Durch die Merkmale des Anspruchs 4 ist es möglich, unter allen Umständen eine korrekte Füllung der Schläuche mit Flüssigkeit aufrecht zu erhalten.

Da bei einem Einsatz bei einer Vortriebseinrichtung die Längen der Schläuche sehr unterschiedlich sein können und sich daher unterschiedliche Widerstände ergeben, ist es zweckmäßig, das Messsystem bei einem bekannten Niveauunterschied im Hinblick auf die Tropfgeschwindigkeit zu eichen, wobei die Tropfgeschwindigkeit bei beiden Sichtrohren unterschiedlich sein kann.

### Kurze Beschreibung der Zeichnungen

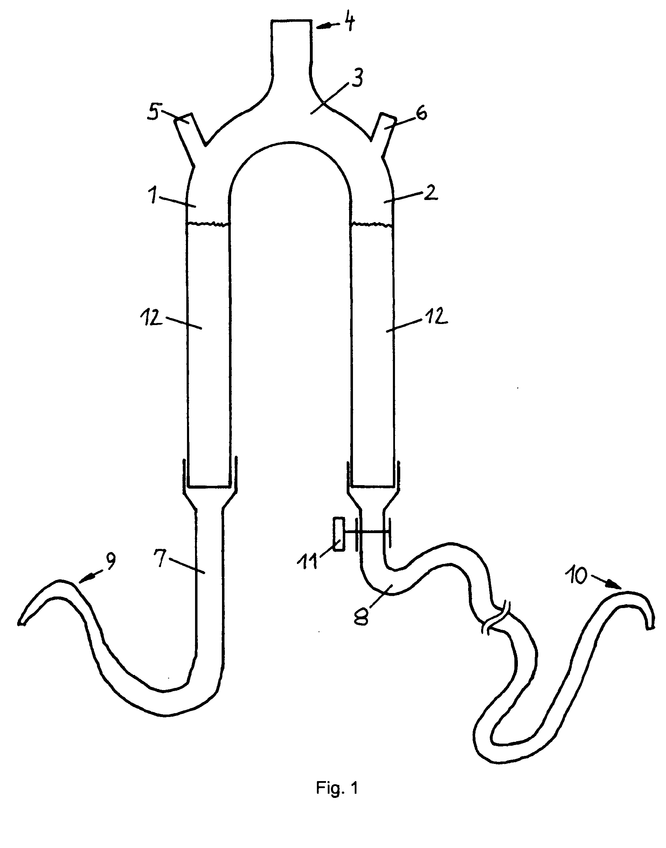

Die Erfindung wird nun anhand der Zeichnung näher erläutert, in der die einzige Figur schematisch ein erfindungsgemäßes Messsystem zeigt.

### Beste Ausführungsform der Erfindung

Das Messsystem weist zwei Sichtrohre 1, 2 auf, die über einen Bogen 3 miteinander verbunden sind, wobei im obersten Bereich der Sichtrohre 1, 2 und im Bereich des Bogens 3 ein Luftraum vorgesehen ist, wogegen sich in den übrigen Bereichen der Sichtrohre 1, 2 eine Flüssigkeit 12 befindet.

Im obersten Bereich des Bogens 3 ist ein Anschluss 4 angeformt, über den eine nicht dargestellte Unterdruckquelle angeschlossen werden kann.

Weiters sind im Bereich des Luftraums des Bogens 3 an dessen beiden Schenkel noch Ansätze 5, 6 angeformt, über die Flüssigkeit 12 eingetropft werden kann, wobei jedoch für eine entsprechende Abdichtung gesorgt ist, um ein Einströmen von Luft zu vermeiden.

An den unteren Bereichen der Sichtrohre 1, 2, die im Betrieb des Messsystems im wesentlichen vertikal stehen, wobei sich der Bogen 3 oben befindet, sind Schläuche 7, 8 befestigt. Dabei kann der Schlauch 7 z.B. an einem bekannten Niveau (Startniveau) festgelegt werden, wobei im freien Endbereich des Schlauchs 7 eine Aufwölbung 9 vorgesehen ist. Beim Betrieb des Messsystems sind die Schläuche 7, 8 mit einer Flüssigkeit 12 gefüllt.

Der Schlauch 8 ist in gleicher Weise mit seinem Endbereich an einer nicht dargestellten Vortriebseinrichtung für eine bergmännische Herstellung eines Kanals festgelegt (Zielniveau). Dabei ist auch im Endbereich des Schlauchs 8, der auch in Schlaufen verlegt sein kann, eine Aufwölbung 10 vorgesehen. Die den auf dem Bogen 3 aufgesteckten Enden gegenüberliegenden Enden der Schläuche 7, 8 sind offen.

Beim dargestellten Ausführungsbeispiel ist das Sichtrohr 2 an seinem unteren Ende mit einem Absperrorgan 11 versehen.

Dies ermöglicht es, die beim Betrieb einer Vortriebseinrichtung unvermeidlichen Schwingungen von dem Sichtrohr 2 durch Absperren des Absperrorgans 11 fernzuhalten. Außerdem beruhigt sich die Flüssigkeit 12 im abgesperrten Bereich des Schlauchs 8 nach dem Abstellen der Vortriebseinrichtung sehr rasch, sodass eine Messung des Niveauunterschieds zwischen dem Endbereich des Schlauchs 7 und dem Endbereich des Schlauchs 8 sehr bald nach dem Abstellen der Vortriebseinrichtung erfolgen kann.

Zur Durchführung einer Messung werden die Sichtrohre 1, 2 und die Schläuche 7, 8 mit Flüssigkeit 12 aus einem nicht dargestellten Tank solange gespült, bis sich keine Luftblasen in den Schläuchen befinden, wobei die Flüssigkeit 12 in den Tank zurückströmt.

Durch Anlegen eines entsprechenden Unterdrucks über den Anschluss 4 können die Pegelstände in den Sichtrohren 1, 2 eingestellt werden, wobei sich diese im obersten Drittel der Sichtrohre 1, 2 befinden sollen.

Aufgrund der beim Betrieb einer Vortriebseinrichtung unvermeidlichen Schwingungen kommt es trotz des angelegten Unterdrucks zu geringen Flüssigkeitsverlusten. Diese werden durch entsprechendes Nachtropfen während der Messung über die Anschlüsse 5, 6 ausgeglichen. Dabei kann die Geschwindigkeit des Nachtropfens experimentell bei bekanntem Niveauunterschied ermittelt werden. Dabei können sich aufgrund unterschiedlicher Längen der Schläuche 7, 8 unterschiedliche Tropfgeschwindigkeiten ergeben.

Aufgrund des angelegten Unterdrucks können die Sichtrohre 1, 2 auch erheblich über das Startniveau und das Zielniveau angehoben werden. Bei einer in eine Grube eingesetzten Vortriebseinrichtung z.B. zur bergmännischen Herstellung eines Kanals können daher die Sichtrohre 1, 2 über das Niveau des oberen Randes der Grube angehoben werden, wodurch diese leicht abgelesen werden können.

Der Niveauunterschied bzw. eine Änderung des Niveauunterschieds kann dabei durch die Differenz in den Pegelständen bzw. eine Änderung dieser Differenz in den beiden Sichtrohren 1,2 erfasst werden.

## Patentansprüche

1. Messsystem zur Erfassung von Niveauunterschieden, wobei zwei in einen gemeinsamen Luftraum mündende und miteinander mechanisch verbundene, vertikal stehenden Rohre (1, 2) vorgesehen sind, die über Leitungen (7, 8) mit einem Ausgangspunkt und einem Zielpunkt verbunden sind, wobei der gemeinsame Luftraum mit einer Unterdruckquelle verbunden ist und die Leitungen (7, 8) mit einer Flüssigkeit (12) gefüllt sind, **dadurch gekennzeichnet, dass** für Untertag-Vortriebseinrichtungen, wie z.B. zum Verlegen von Kanalrohren, die Leitungen als Schlauchleitungen ausgebildet sind, die am Ausgangspunkt und am Zielpunkt offen sind, und dass die Rohre (1, 2) als Sichtrohre ausgebildet sind.

2. Messsystem gemäß Anspruch 1, **dadurch gekennzeichnet, dass** die von den Sichtrohren (1, 2) abgekehrten Enden der Schläuche (7, 8) mit einer Aufwölbung (9, 10) verlegt sind, die im Wesentlichen in einer Vertikalebene verläuft.

3. Messsystem gemäß Anspruch 1 oder 2, **dadurch gekennzeichnet, dass** zumindest der zum Zielpunkt führende Schlauch (8) an seinem dem Sichtrohr (2) nahen Ende oder das mit diesem Schlauch (8) verbundene Sichtrohr (2) mit einem Absperrorgan (11) versehen ist.

4. Messsystem gemäß einem der Ansprüche 1 bis 3, **dadurch gekennzeichnet, dass** im Bereich des die beiden Sichtrohre (1, 2) verbindenden Luftraumes Zuführstutzen (5, 6) vorgesehen sind, über die Flüssigkeit (12) im Wesentlichen tropfenweise in jedes der beiden Sichtrohre (1, 2), gegebenenfalls mit einer unterschiedlichen Zuführrate, zuführbar ist.

## Claims

1. Measuring system for detecting level differences, wherein two tubes (1, 2) which stand vertically, are connected to one another mechanically and open into a common air space, are provided and are connected via conduits (7, 8) to a starting point and a destination point, the common air space being connected to a reduced pressure source and the conduits (7, 8) being filled with a liquid (12), **characterised in that** for underground driving devices, such as, for example for laying sewer pipes, the conduits are configured as hose lines, which are open at the starting point and at the destination point and **in that** the tubes (1, 2) are configured as indicator tubes.

2. Measuring system according to claim 1, **characterised in that** the ends of the hoses (7, 8) remote from the indicator tubes (1, 2) are laid with an arch (9,10) which substantially runs in a vertical plane.

3. Measuring system according to claim 1 or 2, **characterised in that** at least the hose (8) leading to the destination point at its end close to the indicator tube (2), or the indicator tube (2) connected to this hose (8), is provided with a shut-off member (11).

4. Measuring system according to any one of claims 1 to 3, **characterised in that** supply connection pieces (5, 6), via which liquid (12) can be supplied substantially drop by drop into each of the indicator tubes (1, 2), optionally at a different supply rate, are provided in the region of the air space connecting the two indicator tubes (1, 2).

## Revendications

1. Système de mesure pour la détermination de différences de niveau, dans lequel deux tuyaux (1,2) s'étendant verticalement sont prévus, les tuyaux étant reliés mécaniquement ensemblre et débouchant dans un espace d'air commun, les tuyaux étant reliés avec un point de sortie et un point de mise par des canalisations (7,8) dans lequel l'espace d'air commun est raccordé à une source de vide et les canalisations (7,8) sont remplies avec un liquide (12), **caractérisé en ce que**, pour les dispositifs de creusement souterrain, comme par exemple pour la pose de tuyaux d'égout, les canalisations sont formées par des tuyaux flexibles qui sont ouverts aux point de sortie et au point de mire et **en ce que** les tuyaux (1,2) sont formés par des tuyaux transparents.

2. Systéme de mesure selon la revendication 1, **caractérisé en ce que**, les extrémités des tuyaux flexibles (7,8) éloignés des tuyaux transparents (1,2) sont configurés dans une formation en voûte (9,10) essentiellement située dans un plan vertical.

3. Système selon la revendication 1 ou 2, **caractérisé en ce qu'**au moins le tuyau flexible (8) conduisant au point de mire est muni à son extrémité proche du tuyau transparent (2) d'un organe d'obturation (11) ou le tuyau transparent (2) relié à ce tuyau flexible (8) est muni d'un organe d'obturation (11).

4. Système de mesure selon une des revendications 1 ou 2, catactétisé en ce que, dans la zone de l'espace d'air reliant les deux tuyaux transparents (1,2) sont prévus des raccords de conduite (5,6) où le liquide (12) peut s'écouler sensiblement goutte à goutte dans chacun des deux tuyaux transparents (1,2), le cas échéant, avec un taux d'écoulement différent.
